# EUROPÄISCHE PATENTSCHRIFT

(11) **EP 0 602 318 B1**
(45) Veröffentlichungstag und Bekanntmachung des Hinweises auf die Patenterteilung: **21.02.1996**
(21) Anmeldenummer: 93112860.7
(22) Anmeldetag: 11.08.1993
(51) Int. Cl.: F16F 13/00

(54) **Buchsenlager**
Bushing support
Support de manchon

(30) Priorität: 14.12.1992 DE 4242080
(43) Veröffentlichungstag der Anmeldung: 22.06.1994
(73) Patentinhaber: Firma Carl Freudenberg, D-69469 Weinheim (DE)
(72) Erfinder: Rudolf, Axel, D-64625 Bensheim (DE)

(56) Entgegenhaltungen:
- DE-A- 3 820 805

## Beschreibung

Die Erfindung betrifft ein flüssigkeitsgefülltes Buchsenlager mit einer hydraulischen Dämpfungseinrichtung und zwei einander umschließenden Beschlagteilen, die durch einen Federkörper aus elastomerem Werkstoff verbunden sind, wobei zwischen den beiden in Bewegungsrichtung hintereinanderliegenden flüssigkeitsgefüllten Kammern zumindest eine bewegliche Trennwand angeordnet ist.

Ein solches Buchsenlager ist aus der DE-OS 38 20 805 bekannt. Die beiden Beschlagteile sind durch einen Innen- und einen Außenzylinder gebildet, wobei in Richtung der eingeleiteten Schwingungen beiderseits des Innenzylinders im wesentlichen drei Hohlräume vorgesehen sind. Einer der Hohlräume, der dem Innenzylinder benachbart zugeordnet ist, ist flüssigkeitsgefüllt und durch eine schwingfähig aufgehängte Trennwand aus unnachgiebigem Material in eine Arbeits- und eine Ausgleichskammer unterteilt. Die Arbeits- und die Ausgleichskammer sind flüssigkeitsleitend miteinander verbunden, wo die Arbeitskammer durch den Federkörper und die Ausgleichsklammer durch eine faltenbalgähnlich gestaltete Membran begrenzt sind. Dabei ist allerdings zu beachten, daß das Buchsenlager aus einer Vielzahl von Einzelteilen besteht und dadurch in wirtschaftlicher und fertigungstechnischer Hinsicht wenig befriedigend ist. Außerdem ist die Isolierung höherfrequenter Schwingungen durch die massive Ausgestaltung der Trennwand problematisch.

Der Erfindung liegt die Aufgabe zugrunde, ein Buchsenlager der eingangs genannten Art derart weiterzuentwickeln, daß sich ein wesentlich vereinfachter Aufbau und bessere Gebrauchseigenschaften bezüglich der Isolierung bzw. Bedämpfung von Schwingungen ergeben, die zumindest in zwei Frequenzbereichen liegen. Das Lager soll besonders einfach an die jeweiligen Gegebenheiten des Anwendungsfalles anzupassen sein.

Diese Aufgabe wird erfindungsgemäß durch die Merkmale aus Anspruch 1 gelöst. Auf vorteilhafte Ausgestaltungen nehmen die Unteransprüche Bezug.

Zur Lösung der Aufgabe ist es vorgesehen, daß zumindest ein Beschlagteil einen Spalt aufweist, der sich im wesentlichen parallel zur Bewegungsrichtung erstreckt und in Richtung zumindest einer der beiden Kammern geöffnet ist und daß die Trennwand aus elastomerem Werkstoff besteht und im Bereich ihrer Enden durch ein rollbalgartig ausgebildetes Profil die den Spalt begrenzenden Flächen miteinander verbindet. Das Profil ist bevorzugt S-förmig ausgebildet. Durch die vorteilhafte Ausgestaltung der Trennwand besteht die Möglichkeit, diese den jeweiligen Gegebenheiten des Anwendungsfalles besonders günstig anpassen zu können. Die Länge des Spaltes kann im wesentlichen unabhängig von der Form der Beschlagteile gewählt werden und sich bedarfsweise nahezu entlang der gesamten Ausdehnung zwischen dem äußeren Beschlagteil erstrecken. Durch den einfachen Aufbau des Buchsenlagers ist dieses in wirtschaftlicher Hinsicht kostengünstig herstellbar und beispielsweise durch einfaches Austauschen des Beschlagteils, das mit dem Spalt versehen ist, an beliebige Anwendungsfälle anzupassen. Durch die Anordnung der Trennwand innerhalb des Spaltes ist diese nur im wesentlichen quer zur Bewegungsrichtung der eingeleiteten Schwingungen beweglich, was in Verbindung mit dem S-förmigen Profil und der Festlegung an der den Spalt begrenzenden Flächen zu einem besonders geräuscharmen Betrieb des Buchsenlagers führt. Bei Einleitung höherfrequenter Schwingungen kleiner Amplituden schwingt die Trennwand frei zwischen den benachbarten Flächen, ohne diese im Bereich zwischen ihren Enden zu berühren. Bei Dämpfung von tieffrequenten Schwingungen großer Amplituden legt sich die Trennwand, abhängig davon, in welcher der beiden Kammern der vergleichsweise höhere Druck herrscht, abschnittweise und allmählich an eine der Flächen an. Die Trennwand kann zumindest teilweise im Bereich ihrer Oberflächen mit einer Profilierung versehen sein, um Anschlaggeräusche zu minimieren. Ebenso können die angrenzenden Flächen zusätzlich oder alternativ mit einer Profilierung versehen sein. Dadurch, daß die den Spalt begrenzenden Flächen bevorzugt nicht parallel zur Oberfläche der Trennwand verlaufen, wird dieser Effekt weiter begünstigt. Kavitation im Bereich des Spaltes kann durch diese Ausgestaltung zuverlässig ausgeschlossen werden. Gemäß einer vorteilhaften Ausgestaltung kann der Trennwand zumindest ein Anschlag zur Begrenzung von Auslenkbewegungen benachbart zugeordnet sein.

Gemäß einer vorteilhaften Ausgestaltung können die Trennwand und der Federkörper einstückig ineinander übergehend ausgebildet sein. Durch diese Ausgestaltung wird die Herstellung des Buchsenlagers weiter vereinfacht.

Im Hinblick auf die Erzielung eines weiteren Dämpfungsmaximums und somit einer breitbandigeren Dämpfung, können innerhalb des Buchsenlagers zwei Spalte und zwei Trennwände vorgesehen sein. Die beiden Trennwände unterscheiden sich bevorzugt durch eine voneinander abweichende Trägkeitsmasse und/oder Federsteifigkeit Eine der Trennwände kann beispielsweise im Hinblick auf die Isolierung höherfrequenter Schwingungen vergleichsweise dünnwandig ausgebildet sein und dadurch eine geringe Trägheitsmasse aufweisen. Dadurch, daß sie dann bei Einleitung hochfrequenter Schwingungen leicht hin- und herverschiebbar ist, können entsprechende Relativbewegungen dieser Trennwand kompensiert werden. Bei Einleitung solcher Schwingungen ergeben sich nahezu keine Druckveränderungen innerhalb der benachbarten Kammern, so daß die eingeleiteten Schwingungen nicht auf das angeschlossene Bauteil übertragen werden können.

Zur Dämpfung tieffrequenter Schwingungen können die beiden Kammern durch einen Drosselkanal, der die Dämpfungseinrichtung bildet, flüssigkeitsleitend miteinander verbunden sein. Die Länge und der Querschnitt des Drosselkanals ist bevorzugt derart abgestimmt, daß Schwingungen im Frequenzbereich von 5 bis 15 Hz durch eine Resonanzschwingung der Flüssigkeitssäule innerhalb des Dämpfungskanals gedämpft werden können.

Der einfache Aufbau des Buchsenlagers kann dadurch begünstigt sein, daß der Drosselkanal durch ein den Gummikörper tragendes Außenblech und ein das Außenblech umschließenden Außentopf begrenzt ist. Das äußere Beschlagteil ist in diesem Falle als Außentopf ausgebildet.

Zur Funktion des Buchsenlagers wird folgendes ausgeführt:

Bei Einleitung tieffrequenter Schwingungen mit großen Amplituden, im Bereich von 5 bis 15 Hz legt sich die Trennwand mit ihrer Oberfläche, die in der Kammer niedrigeren Druckes angeordnet ist, allmählich und abschnittweise an die benachbarte, den Spalt begrenzende Fläche des Anschlagteils an. Hat sich die Trennwand an die Fläche angelegt, tritt eine Verhärtung des Lagers ein. Die Dämpfung der tieffrequenten Schwingung erfolgt über den Drosselkanal, der die beiden flüssigkeitsgefüllten Kammern miteinander verbindet. Vergleichweise höherfrequente Schwingungen, z.B. im Bereich von 15 bis 100 Hz werden durch die freie Hin- und Herbeweglichkeit der Trennwand zwischen den Anschlagflächen und die gegenphasigen Schwingungen von Flüssigkeitsbestandteilen im Spaltbereich zur Verbesserung des Leerlaufverhaltens von Kraftfahrzeugen isoliert. Bei Verwendung von zumindest einem weiteren Spalt und einer darin angeordneten Trennwand können weitere Dämpfungsmaxima erzielt werden, die durch die Beweglichkeit der Trennwand und die Ausgestaltung den Spaltes des jeweiligen Gegebenheiten des Anwendungsfalles in besonders günstiger Weise angepaßt werden können.

An mindestens einem der Beschlagteile kann ein in mindestens einer Kammer in Bewegungsrichtung der Schwingungen vorspringender Anschlagpuffer vorgesehen sein, wobei der Anschlagpuffer bevorzugt mit einem Gummiüberzug versehen ist, der einstückig mit dem Federkörper ausgeführt ist. Hinsichtlich einer verbesserten Gebrauchsdauer besteht die Möglichkeit, den Gummiüberzug im Bereich seiner Anschlagflächen mit einer Armierung zu versehen, die vergleichsweise unnachgiebig ausgeführt ist. Extremauslenkungen, die durch den Anschlagpuffer begrenzt werden, führen nicht zu einer Überdehnung des Federkörpers. Der Gummiüberzug zwischen den Anschlagflächen der beiden Beschlagteile kann bedarfsweise mit zumindest einer Eintiefung versehen sein, um dadurch eine Endlagendämpfung mit weiter minimierter Geräuschbildung zu bewirken.

Die Bewegungsrichtung und der Spalt schließen bevorzugt einen Winkel von weniger als 20° ein. Die rollbalgartig ausgebildete Trennwand und deren Anordnung parallel zur Bewegungsrichtung der eingleiteten Schwingungen verhindert Flüssigkeitsverwirbelungen innerhalb des Lagers, bei einer Anschlagberührung zwischen der Trennwand und den angrenzenden Flächen. Das Buchsenlager ist an seinen stirnseitigen Enden flüssigkeitsdicht gegen die Umgebung abgedichtet und mit verformbaren, gummielastischen Stirnwänden begrenzt, die ebenfalls einstückig mit dem Federkörper ausgeführt sind. Die Stirnwände weisen bevorzugt eine derartige Gestalt auf, daß auch bei Extremauslenkungen des inneren Beschlagteils relativ zum äußeren Beschlagteil keine nennenswerten Zugspannungen auftreten können. Die vorteilhaften Gebrauchseigenschaften während einer langen Gebrauchsdauer können dadurch erhalten bleiben.

Der Gegenstand der Erfindung wird nachfolgend anhand der als Anlage beigefügten Zeichnungen weiter verdeutlicht. Es zeigen:
- Fig. 1: eine gebrauchsfertige Hülsengummifeder in quergeschnittener Darstellung;
- Fig. 2: einen Längsschnitt durch das Lager aus Fig. 1 gemäß der Schnittlinie A - A;
- Fig. 3: ein weiteres Ausführungsbeispiel, ähnlich dem Ausführungsbeispiel aus Fig. 1, wobei innerhalb des inneren Beschlagteils zwei Spalten mit jeweils einer Trennwand vorgesehen sind;
- Fig. 4: einen Schnitt entlang der Linie B - B aus Fig. 3;
- Fig. 5: ein drittes Ausführungsbeispiel, bei dem die Trennwand nur teilweise innerhalb der den Spalt begrenzenden Flächen angeordnet ist;
- Fig. 6: das Buchsenlager aus Fig. 5 in längsgeschnittener Darstellung entlang der Linie C - C;
- Fig. 7: das Buchsenlager aus Fig. 5 in geschnittener Darstellung entlang der Linie F - F;
- Fig. 8: ein weiteres Ausführungsbeispiel, ähnlich dem Ausführungsbeispiel aus Fig. 5, wobei das innere Beschlagteil eine geänderte Anschlagfläche aufweist;
- Fig. 9: das Buchsenlager aus Fig. 8 in längsgeschnittener Darstellung entlang der Linie G - G.

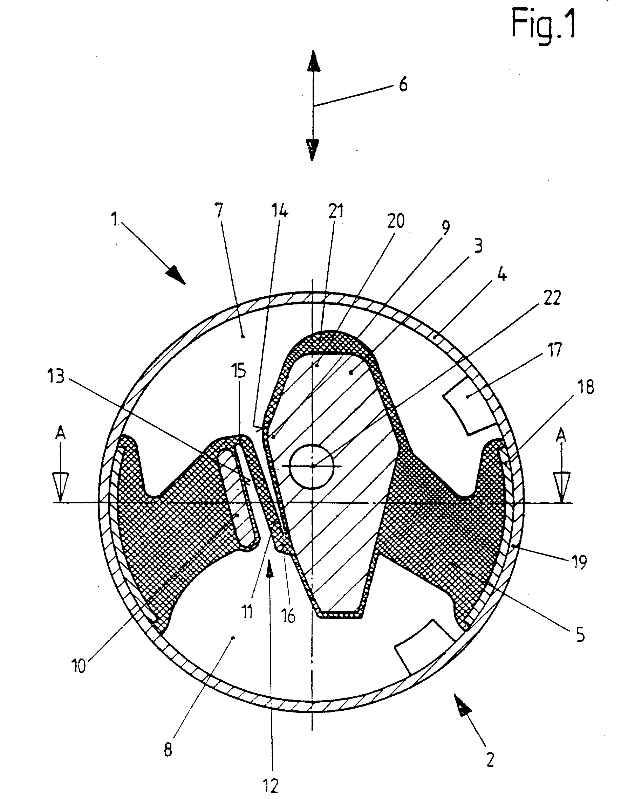

Die in den Fig. 1 bis 9 gezeigten Buchsenlager 1 umfassen zwei einander umschließende Beschlagteile 3, 4 die durch einen Federkörper 5 aus elastomerem Werkstoff nachgiebig aufeinander abgestützt sind. Die Beschlagteile 3, 4 bestehen in diesen Ausführungsbeispielen aus einem metallischen Werkstoff, wobei das innere Beschlagteil 3 in jedem der Ausführungsbeispiele eine Längsbohrung 22 und zumindest einen Spalt 12 aufweist, wobei innerhalb des Spalts 12 die Trennwand 11 angeordnet ist. Die Trennwand 11 ist in diesen Ausführungsbeispielen mit dem Federkörper 5 und dem Überzug 21 der Anschlagpuffer 20 einstückig ineinander übergehend ausgebildet. Die beiden flüssigkeitsgefüllten Kammern 7, 8 sind durch einen Drosselkanal 17, der als Dämpfungseinrichtung 2 ausgebildet ist, flüssigkeitsleitend verbunden. Der Federkörper 5 ist an einem Außenblech 18 festgelegt, das als Fensterrohr ausgebildet ist und aus einem metallischen Werkstoff besteht. Das Außenblech 18 ist unverrückbar und flüssigkeitsdicht im äußeren Beschlagteil 4 gelagert. Das innere und das äußere Beschlagteil 3, 4 sind derart ausgebildet, daß sie mit Maschinenteilen, die beispielsweise durch das Fahrwerk und die Karosserie eines Kraftfahrzeugs gebildet sind, zusammengefügt werden können. Der Federkörper 5 ist durch unmittelbares Anvulkanisieren einerseits mit dem inneren Beschlagteil 3 und andererseits mit dem Außenblech 18 verbunden. Das innere Beschlagteil 3 ist in Bewegungsrichtung 6 der eingeleiteten Schwingungen beiderseits der Längsbohrung 22 mit in Richtung der Kammern 7, 8 vorspringenden Anschlagpuffern 20 versehen, die jeweils mit einem Überzug 21 aus gummielastischem Werkstoff versehen sind, der einstückig mit dem Federkörper 5 ausgebildet ist. Bei Einleitung von Schwingungen größerer Amplitude, die der Dämpfung bedürfen, gelangen die Trennwände 11 der hier dargestellten Buchsenlager zumindest teilweise mit den den Spalt 12 begrenzenden Flächen 13, 14 in Eingriff und bewirken dadurch eine Verhärtung des Lagers. Wenn sich die Trennwände 11 zumindest teilweise an die Flächen 13, 14 angelegt haben, stellt sich eine abwechselnde Hindurchpressung von Flüssigkeitsbestandteilen durch den Drosselkanal 17 in die jeweilige Kammer 7, 8 vergleichsweise niedrigeren Druckes ein. Eine gute Dämpfungswirkung ist hiervon die Folge. Sie kann in Abhängigkeit von der jeweiligen Ausbildung der Dämpfungsöffnung auf der Ausnutzung von Drossel- oder Tilgereffekten beruhen. Die diesbezüglichen Abstimmungsvoraussetzungen sind dem Fachmann bekannt und nicht Gegenstand der vorliegenden Erfindung.

Bei Extremauslenkungen der beiden Beschlagteile, 3, 4 relativ zueinander, können die Anschlagpuffer 20 mit ihrem gummielastischen Überzug 21 an die benachbarte Innenseite des äußeren Beschlagteils 4 anschlagen. Durch die elastische Nachgiebigkeit des Überzugs 21 wird die Entstehung von unerwünschten Anschlaggeräuschen weitgehend verhindert.

In Fig. 1 erstreckt sich die Trennwand 11 nur innerhalb des Spalts 12, der durch die Flächen 13, 14 des inneren Beschlagteils begrenzt ist. Hierbei ist von Vorteil, daß selbst bei stoßartigen Belastungen und dadurch entstehenden Druckspitzen innerhalb der Kammern 7, 8 eine unerwünscht große Verformung der Trennwand 11 zuverlässig verhindert wird. In Abhängigkeit von den jeweiligen Gegebenheiten des Anwendungsfalles kann eine Armierung innerhalb der Trennwand vorgesehen sein, ist im allgemeinen bei einer Ausgestaltung gemäß Fig. 1 jedoch entbehrlich.

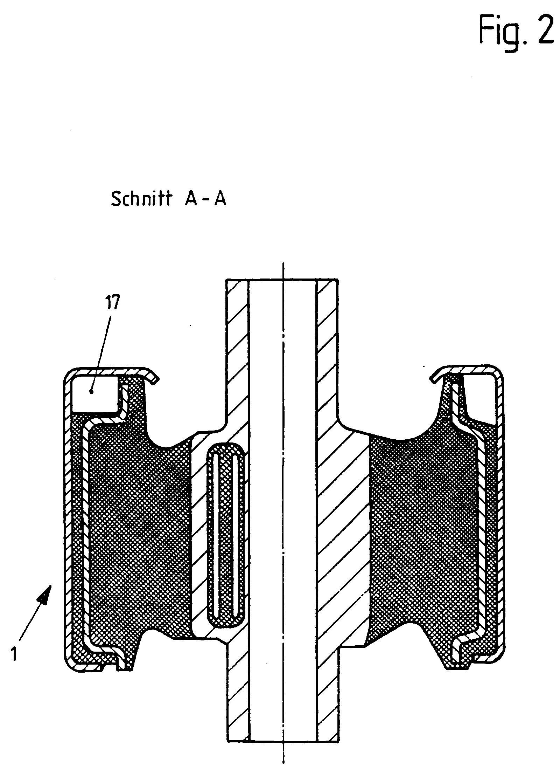

In Fig. 2 ist ein Längsschnitt durch das Buchsenlager 1 aus Fig. 1 entlang des Schnitts A -A gezeigt. Wie aus dieser Zeichnung hervorgeht, ist der Drosselkanal 17 ringförmig gestaltet und erstreckt sich entlang des Außenumfangs des Buchsenlagers 1.

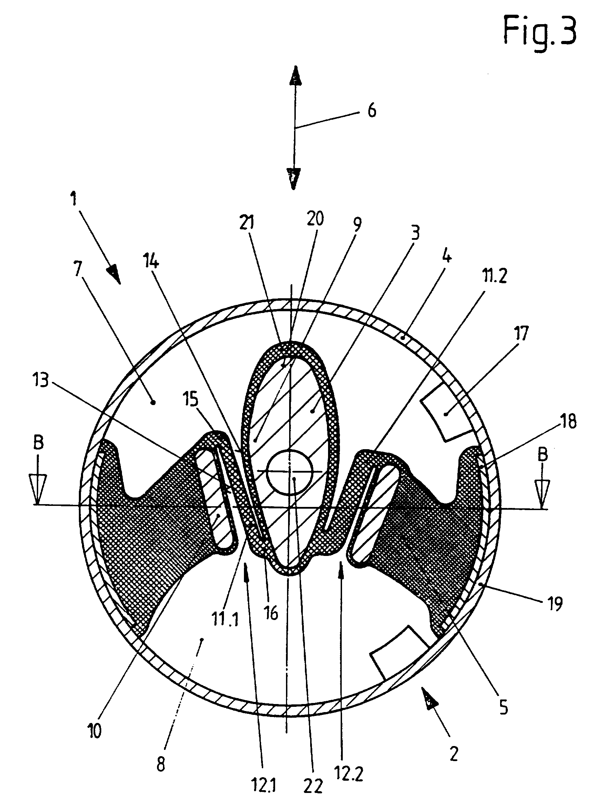

In Fig. 3 ist ein Buchsenlager 1 gezeigt, das ähnlich gestaltet ist, wie das Buchsenlager 1 aus Fig. 1. Zur Erzielung eines weiteren Dämpfungsmaximums ist in diesem Ausführungsbeispiel jedoch ein zusätzlicher Spalt 12.2 vorgesehen, der ebenfalls innerhalb des inneren Beschlagteils 3 angeordnet ist, wobei die beiden Spalte 12.2, 12.2 im wesentlichen symmetrisch ausgebildet sind. Die Funktion der Trennwand 11.1 innerhalb des Spaltes 12.1 entspricht der Funktion der beiden Teile aus Fig. 1, während die zweite Trennwand 11.2 innerhalb des zweiten Spaltes 12.2 eine relativ vergrößerte Materialstärke und dadurch eine größere Trägheitsmasse und Federsteifigkeit aufweist. Zur Dämpfung tieffrequenter Schwingungen im Bereich von beispielsweise 10 Hz sind beide Trennwände 11.1, 11.2, abhängig vom Druckgefälle zwischen den beiden Kammern 7, 8 an jeweils eine Fläche der Spalte 12.1, 12.2 angelegt.

Ein Flüssigkeitsaustausch zwischen den beiden benachbarten Kammern 7,8 erfolgt durch den Drosselkanal 17. Vergleichsweise höherfrequente Schwingungen in einem breiten Frequenzbereich können durch diese Ausgestaltung gedämpft/isoliert werden.

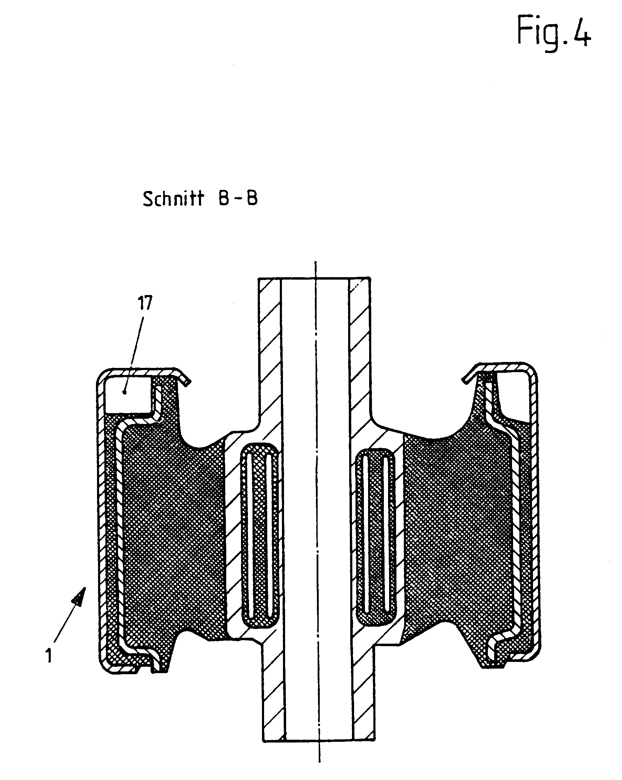

In Fig. 4 ist das Lager aus Fig. 3 in einem Längsschnitt entlang der Linie B - B gezeigt.

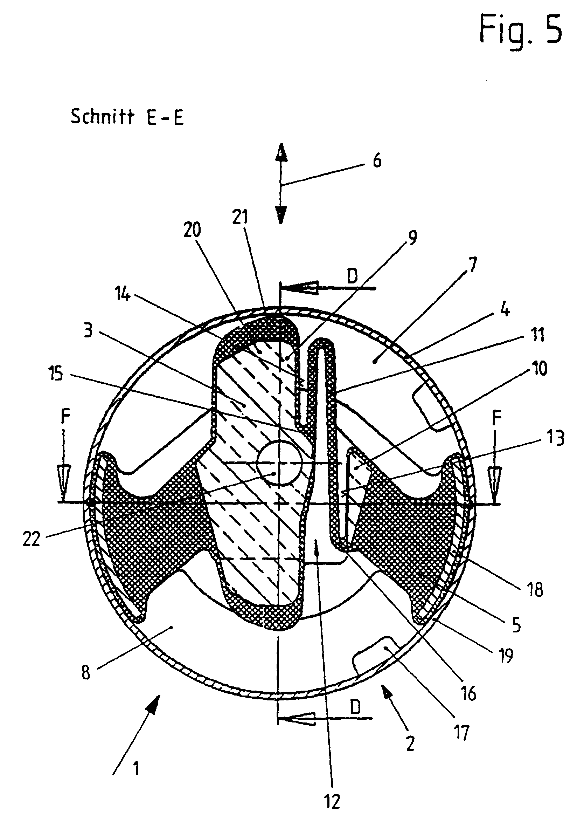

In Fig. 5 ist ein weiteres Ausführungsbeispiel eines Buchsenlagers gezeigt, wobei die Trennwand 11 nur in einem Teilbereich an die Flächen 13, 14 des Spalts 12 anlegbar ist. Der Vorteil des erfindungsgemäßen Buchsenlagers ist in seiner universellen Anwendbarkeit zu sehen. Bei unveränderten Außenabmessungen können die Gebrauchseigenschaften durch unterschiedliche Ausgestaltung des inneren Beschlagteils 3 mit dem darin vorgesehenen Spalt 12 und der Trennwand 11 vorteilhaft beeinflußt werden. Die Trennwand 11 kann in diesem Ausführungsbeispiel insbesondere im Übergangsbereich, in dem sie aus dem Spalt 12 des inneren Beschlagteils 3 austritt, eine Armierung aufweisen, um unzulässig große Formänderungen bei Beaufschlagung mit Druckspitzen zu vermeiden. Abweichend von dieser Ausgestaltung kann die Form der Membran derart variiert und beispielsweise in ihrer Länge verkürzt werden, daß sich aus dem im wesentlichen S-förmigen Profil ein nahezu U-förmiges Profil ergibt. Neben einer Veränderung der Länge können Abweichungen der Biegesteifigkeit der Trennwand 11 die Gebrauchseigenschaften des Lagers vorteilhaft beeinflussen.

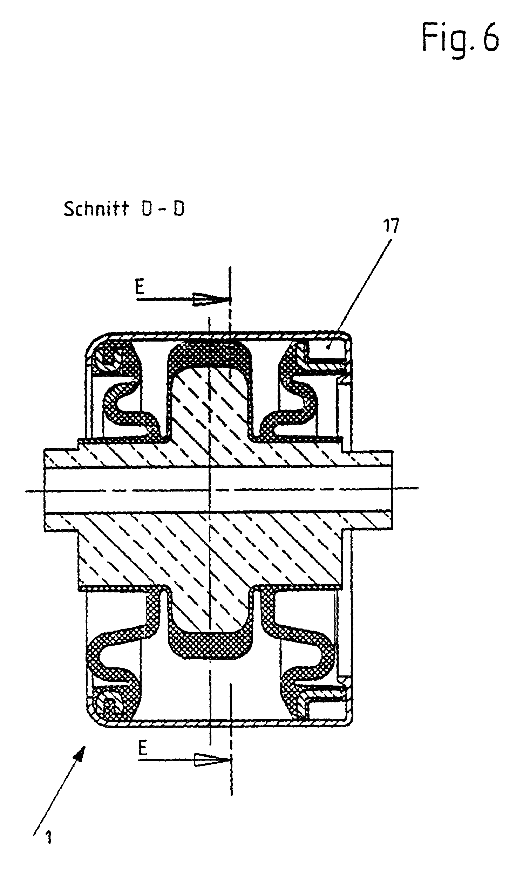

In Fig. 6 ist das in Fig. 5 dargestellte Lager in längsgeschnittener Form entlang der Schnittlinie C - C gezeigt.

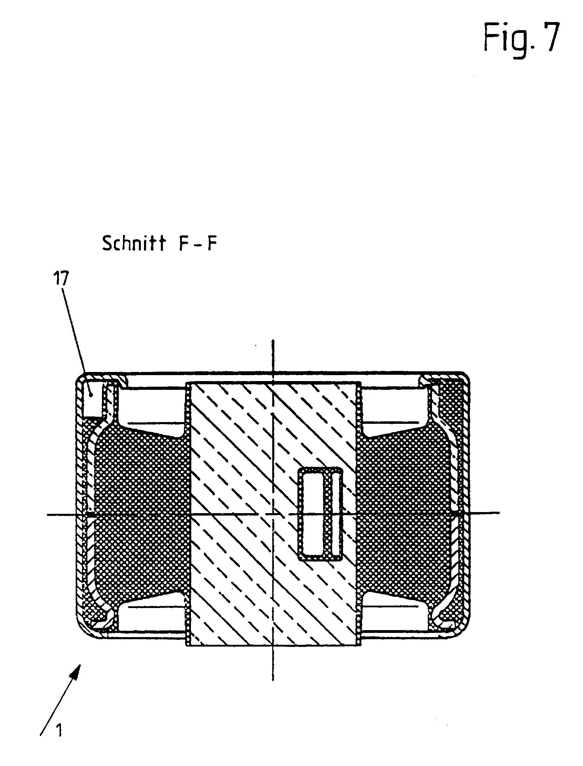

In Fig. 7 ist das Lager aus Fig. 5 entlang des Schnitts F - F dargestellt. Zu erkennen ist das einstückig ausgebildete innere Beschlagteil mit seinem Spalt und die innerhalb des Spalts angeordnete Trennwand.

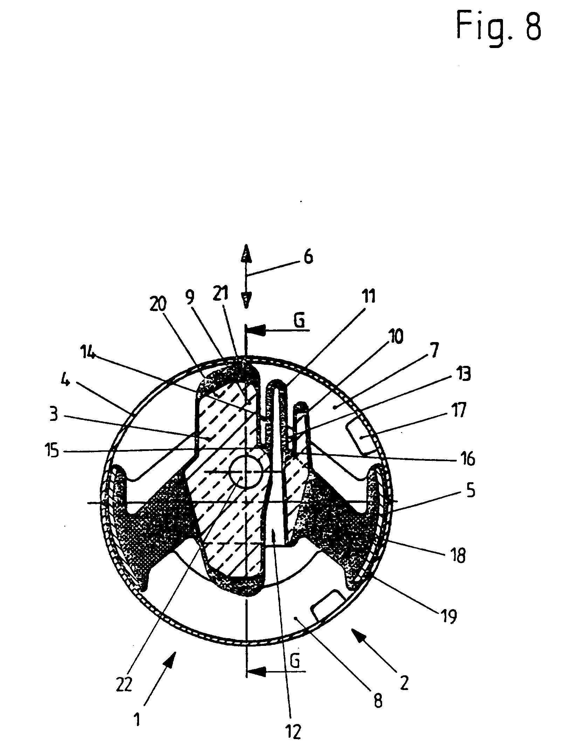

In Fig. 8 ist ein viertes Ausführungsbeispiel des erfindungsgemäßen Buchsenlagers gezeigt, wobei das innere Beschlagteil 3 den kanalartig ausgebildeten Spalt 12 aufweist, der durch die Trennwand 11 in Richtung der Kammer 7 verschlossen ist. Die Flächen 13, 14, die als Anschlagflächen vorgesehen sind, erstrecken sich beiderseits entlang der im wesentlichen U-förmig ausgebildeten Trennwand 11 und sind dieser mit Abstand benachbart zugeordnet. In diesem Ausführungsbeispiel ist es vorgesehen, daß die Flächen 13, 14 und die Trennwand 11 im Bereich ihrer gesamten Oberfläche eine Profilierung aufweisen, so daß Anschlaggeräusche und Kavitation während des Betriebs des Buchsenlagers zuverlässig ausgeschlossen werden.

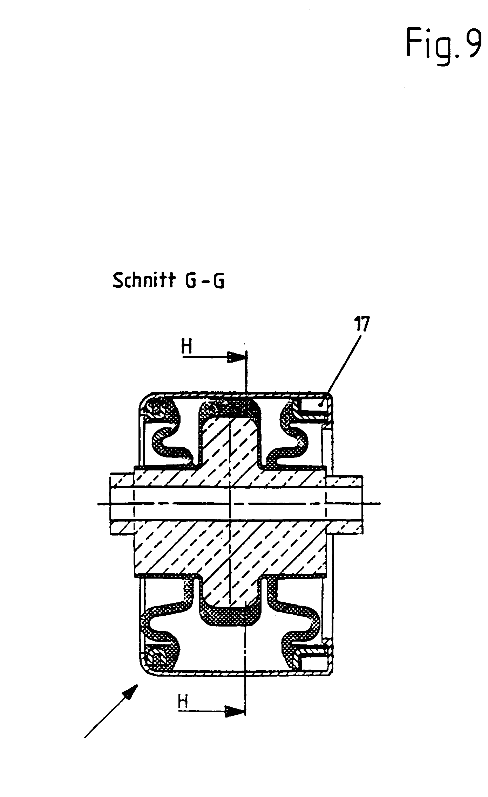

In Fig. 9 ist das Lager aus Fig. 8 entlang des Schnitts G - G gezeigt.

Die Buchsenlager 1 gemäß den Ausführungsbeispielen 1 bis 9 sind jeweils im herstellungsbedingten, nicht eingebauten Zustand gezeigt. Die Längsbohrung 22 weist in Bezug auf das äußere Beschlagteil 4 eine Exzentrizität auf, die nach dem Einbau durch eine statische Vorlast verringert oder vollständig aufgehoben werden kann.

## Patentansprüche

1. Flüssigkeitsgefülltes Buchsenlager (1) mit einer hydraulischen Dämpfungseinrichtung (2) und zwei einander umschließenden Beschlagteilen (3,4), die durch einen Federkörper (5) aus elastomerem Werkstoff verbunden sind, wobei zwischen den beiden in Bewegungsrichtung (6) hintereinanderliegenden flüssigkeitsgefüllten Kammern (7,8) zumindest eine bewegliche Trennwand (11) angeordnet ist, dadurch gekennzeichnet, daß zumindest ein Beschlagteil (3, 4) einen Spalt (12) aufweist, der sich im wesentlichen parallel zur Bewegungsrichtung (6) erstreckt und in Richtung zumindest einer der beiden Kammern (7, 8) geöffnet ist und daß die Trennwand (11) aus elastomerem Werkstoff besteht und im Bereich ihrer Enden (15, 16) durch ein rollbalgartig ausgebildetes Profil die den Spalt (12) begrenzenden Flächen (13, 14) miteinander verbindet.

2. Buchsenlager nach Anspruch 1, dadurch gekennzeichnet, daß der Trennwand (11) zumindest ein Anschlag (9, 10) zur Begrenzung von Auslenkbewegungen benachbart zugeordnet ist.

3. Buchsenlager nach Anspruch 1 bis 2, dadurch gekennzeichnet, daß die Trennwand (11) und der Federkörper (5) einstückigig ineinander übergehend ausgebildet sind.

4. Buchsenlager nach Anspruch 1 bis 3, dadurch gekennzeichnet, daß zumindest zwei Spalte (12.1, 12.2) und zwei Trennwände (11.1, 11.2) vorgesehen sind.

5. Buchsenlager nach Anspruch 4, dadurch gekennzeichnet, daß die beiden Trennwände (11.1, 11.2) sich voneinander durch eine abweichende Trägheitsmasse und/oder Federsteifigkeit unterscheiden.

6. Buchsenlager nach Anspruch 1 bis 5, dadurch gekennzeichnet, daß die beiden Kammern (7, 8) durch einen Drosselkanal, der die Dämpfungseinrichtung (2) bildet, flüssigkeitsleitend miteinander verbunden sind.

7. Buchsenlager nach Anspruch 6, dadurch gekennzeichnet, daß der Drosselkanal (17) durch ein den Federkörper (5) tragendes Außenblech (18) und den das Außenblech (18) umschließenden Außentopf (19) begrenzt ist.

8. Buchsenlager nach Anspruch 1 bis 7, dadurch gekennzeichnet, daß an mindestens einem der Beschlagteile (3, 4) ein in mindestens eine Kammer (7, 8) in Bewegungsrichtung (6) der Schwingungen vorspringender Anschlagpuffer (20) vorgesehen ist und daß der Anschlagpuffer (20) mit einem gummielastischen Überzug (21) versehen ist, der einstückig mit dem Federkörper (5) ausgeführt ist.

9. Buchsenlager nach Anspruch 1 bis 8, dadurch gekennzeichnet, daß die Bewegungsrichtung (6) und der Spalt (11) einen Winkel von weniger als 20° einschließen.

## Claims

1. A fluid-filled bushing-type support (1) with a hydraulic damping device (2) and two fittings (3,4), the one surrounding the other, which are connected by a spring body (5) made of elastomeric material, at least one mobile dividing wall (11) being arranged between the two fluid-filled chambers (7, 8), which lie one behind the other in the direction of motion (6), characterized in that at least one fitting (3, 4) has a gap (12) which extends essentially parallel to the direction of motion (6) and is open in the direction of at least one of the two chambers (7, 8), and in that the dividing wall (11) is composed of elastomeric material and, in the region of its ends (15, 16), connects the surfaces (13, 14) bounding the gap (12) to one another by means of a profile similar in design to a rolling bellows.

2. A bushing-type support according to claim 1, characterized in that the dividing wall (11) is assigned at least one stop (9, 10) to limit deflections.

3. A bushing-type support according to either of claims 1 and 2, characterized in that the dividing wall (11) and the spring body (5) are designed to merge integrally into one another.

4. A bushing-type support according to any of claims 1 to 3, characterized in that at least two gaps (12.1, 12.2) and two dividing walls (11.1, 11.2) are provided.

5. A bushing-type support according to claim 4, characterized in that the two dividing walls (11.1, 11.2) differ from one another by having a different inertial mass and/or spring stiffness.

6. A bushing-type support according to any of claims 1 to 5, characterized in that the two chambers (7, 8) are connected to one another in a manner which allows the passage of fluid by a restrictor passage which forms the damping device (2).

7. A bushing-type support according to claim 6, characterized in that the restrictor passage (17) is bounded by an outer plate (18) which carries the spring body (5) and by the outer pot (19) which surrounds the outer plate (18).

8. A bushing-type support according to any of claims 1 to 7, characterized in that a stop buffer (20) which projects into at least one chamber (7, 8) in the direction of motion (6) of the vibrations is provided on at least one of the fittings (3, 4), and in that the stop buffer (20) is provided with a rubber-elastic covering (21) which is formed integrally with the spring body (5).

9. A bushing-type support according to any of claims 1 to 8, characterized in that the direction of motion (6) and the gap (11) enclose an angle of less than 20°.

## Revendications

1. Support de manchon (1) rempli de liquide, comportant un dispositif amortisseur hydraulique (2) et deux garnitures (3, 4) s'enveloppant mutuellement, qui sont reliés par un élément élastique (5) en matériau élastomère, au moins une paroi de séparation (11) mobile étant disposée entre les deux chambres (7, 8) remplies de liquides placées l'une derrière l'autre suivant le sens de mouvement (6), caractérisé en ce qu'au moins une garniture (3, 4) comporte une fente (12) s'étendant essentiellement parallèlement au sens de mouvement (6) et étant ouverte en direction d'au moins l'une des deux chambres (7, 8), et en ce que la paroi de séparation (11) est en matériau élastomère et relie entre elles, au niveau de ses extrémités (15, 16), les surfaces (13, 14) délimitant la fente (12) par un profil conçu à la manière d'un soufflet roulant.

2. Support de manchon selon la revendication 1, caractérisé en ce qu'au moins une butée (9, 10) est attribuée à la paroi de séparation (11), contiguë à celle-ci, pour limiter des mouvements de déviation.

3. Support de manchon selon l'une des revendication 1 à 2, caractérisé en ce que la paroi de séparation (11) et l'élément élastique (5) sont exécutés de manière à se fondre l'un dans l'autre.

4. Support de manchon selon l'une quelconque des revendications 1 à 3, caractérisé en ce qu'au moins deux fentes (12.1, 12.2) et deux parois de séparation (11.1, 11.2) sont prévues.

5. Support de manchon selon la revendication 4, caractérisé en ce que les deux parois de séparation (11.1, 11.2) se distinguent l'une de l'autre par une masse d'inertie et/ou une rigidité élastique divergentes.

6. Support de manchon selon l'une quelconque des revendications 1 à 5, caractérisé en ce que les deux chambres (7, 8) communiquent entre elles par un canal d'étranglement formant le dispositif amortisseur (2), de manière à permettre l'écoulement du liquide.

7. Support de manchon selon la revendication 6, caractérisé en ce que le canal d'étranglement (17) est limité par une tôle extérieure (18) portant l'élément élastique (5) et le pot extérieur (19) enveloppant la tôle extérieure (18).

8. Support de manchon selon l'une quelconque des revendications 1 à 7, caractérisé en ce qu'un amortisseur de butée (20) est prévu sur au moins l'une des garnitures (3, 4), faisant saillie dans au moins une chambre (7, 8) suivant le sens de mouvement des oscillations, et en ce que l'amortisseur de butée (20) est pourvu d'un revêtement (21) en gomme élastique exécuté de manière à former une pièce avec l'élément élastique (5).

9. Support de manchon selon l'une quelconque des revendications 1 à 8, caractérisé en ce que le sens de mouvement (6) et la fente (11) enferment un angle de moins de 20°.
